# EUROPEAN PATENT APPLICATION

(11) **EP 4 099 247 A1**
(43) Date of publication of application: **07.12.2022**
(21) Application number: 21177246.2
(22) Date of filing: 01.06.2021
(51) Int. Cl.: G06Q 20/02, G06Q 20/12

(54) **PAYMENT METHOD**

(71) Applicant: Weanswer Limited, Chippenham Wiltshire SN15 1BN (GB)
(72) Inventor: BISHOP, Liam, Chippenham, Wiltshire, SN15 1BN (GB); WHITTAKER, Matvey, Chippenham, Wiltshire, SN15 1BN (GB); ADAMS, Jake, Chippenham, Wiltshire, SN15 1BN (GB)
(74) Representative: CSY Herts

(57) **Abstract**

A method and apparatus for making a secure payment over a voice telephone network comprising providing a payment controller operable to receive payment information over a telephone network and pass it on to a vendor computer system, to effect payment, providing a computing device having a computer display, and a voice telephone device for a call agent, commencing a telephone voice call between the call agent and a buyer, the call agent directing the buyer with voice commands via the telephone device to enter buyer payment card information via their telephone keypad, receiving the payment card information at the payment controller, causing the payment controller to provide progress information on the call agent display, but obscuring the detail of the payment card information on the display, automatically and without human intervention, navigating a standard html-based card payment web page of the vendor, in order to enter the buyer card information into the vendor computer system and effect a secure payment, without interacting directly with a card payment provider api.

## Description

This invention relates to a secure payment system, and in particular to a system in which confidential payment details are provided over a voice telephone system.

In a typical online payment transaction, there are three parties. First, the vendor of the goods which are being bought. Second, there is the buyer who typically pays for the goods using a credit or debit card, which means that also there is a third party, which is the payment merchant entity, and which once given relevant payment card security details supplied by the buyer, releases funds to the vendor to pay for the goods.

There is a significant demographic which is willing to buy goods remotely over online systems but is unwilling to enter payment details such as credit or debit card numbers etc. into an online form. For this type of buyer, it is still necessary to provide human call agents who interact with the buyer over a voice call to coordinate receipt of the payment details from the buyer, and pass them on for receipt by a payment merchant.

Thus often, there is a fourth entity involved the transaction, which is the call centre entity which provides a human call agent to take payment details from the buyer.

In the prior art, these steps are carried out by the agent following a script, speaking to the buyer and, typically the buyer entering card details via their own telephone keypad with the data transmitted over the telephone system, for example, using DTMF tones. During entry of the card details, the call agent is unable to see or hear what is entered and these details are passed automatically via an application programming interface (API) to the relevant payment merchant. The payment merchant then interacts with the vendor to make the payment.

Before this can happen, the call agent entity must enter technical and commercial relationships with each of the relevant payment merchants and integrate their technical systems with each of the payment merchants' own computer systems. Thus, at the call agent entity, the call agent entity must provide a computer system which is customised and integrated with each payment merchant and each payment merchant's API. As well as being technically complex, this often attracts significant cost to integrate with each of the payment merchants in addition to the cost of integrating with the vendor's CRM's

At the same time, the payment merchants will usually have separate relationships directly with each of the vendors so that the vendors can take payment via their online forms for those buyers that are happy to carry out a purchase without a human call agent. Thus, for each vendor, there are in effect, two parallel payment systems; one using voice interactions and call agents, and a second, using automated online forms.

In accordance with a first aspect of the invention there is provided a method of making a secure payment over a voice telephone network comprising the steps of providing a payment controller operable to receive payment information over a telephone network and pass it on to a vendor computer system, to effect payment, providing a computing device having a computer display, and a voice telephone device for a call agent, commencing a telephone voice call between the call agent and a buyer, the call agent directing the buyer with voice commands via the telephone device to enter buyer payment card information via their telephone keypad, receiving the payment card information at the payment controller, causing the payment controller to provide progress information on the call agent display, but obscuring the detail of the payment card information on the display, characterised by automatically and without human intervention, navigating a standard html-based card payment web page of the vendor, in order to enter the buyer card information into the vendor computer system and effect a secure payment, without interacting directly with a card payment provider api.

Whilst, the examples given below are generally described in terms of a card payment, it will be noted that other forms of payment are intended to be encompassed by the system below, such as taking bank account details to set up a direct debit or standing order instruction. Thus payment details should be construed broadly to include all the data necessary for a buyer to provide financial information to set up a desired payment with the vendor, regardless of the precise mechanism used to deliver the payment.

In this way, the online form of the vendor is leveraged to allow the call agent to use it for those buyers unwilling to enter details into the form directly. The system allows this form to be used but without breaching the confidentiality of the buyer's payment details. This is because the call agent never sees the details and instead the system of the invention provides the interface between the buyer and the vendor's conventional, typically HTML constructed, online payment form.

In this way the duplication of payment systems is avoided, and complexity is greatly reduced. It is simply necessary for the vendors to engage in a system which provides an online form and then select a call agent entity that uses the present invention, and provide minimal technical support to allow them to use the invention to interact directly with their online form.

Furthermore, from the call agent entity point of view, there is no cost of integrating the new payment controller with each of the payment merchants. Their costs are limited to implementing the automated interaction with the vendor's online form.

Embodiments of the invention will now be described by way of example, with reference to the drawings in which:-
Figure 1 is a block diagram of the complete system; and
Figure 2 is a flow chart showing the actions of the payment controller.

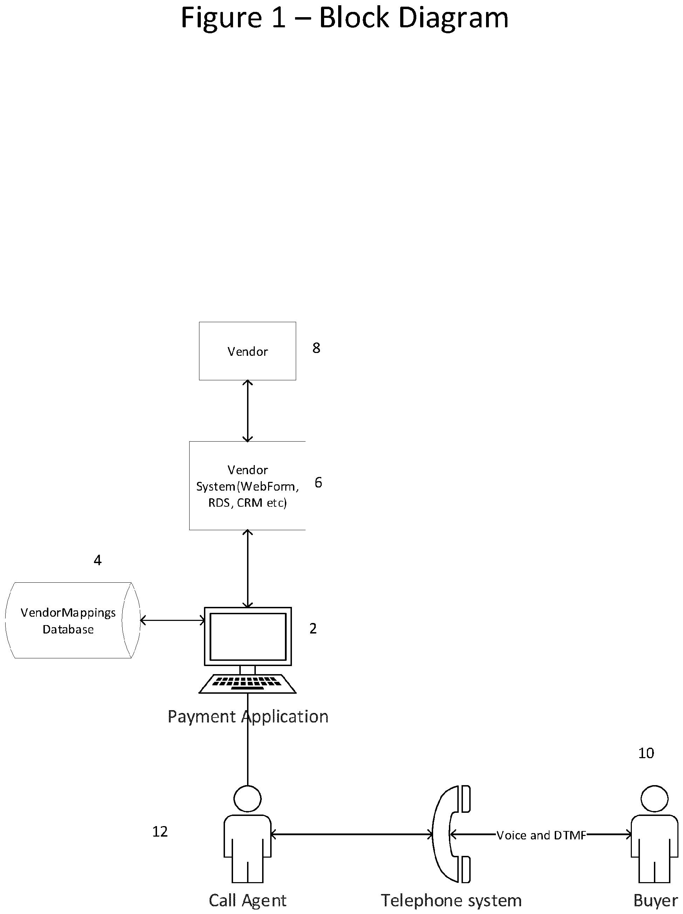

With reference to Figure 1, a payment controller 2 interacts with a vendor database 4 which holds details of mappings into a vendor online form or web basket 6, which is described in more detail below. A vendor 8 provides an online shop and the ability to buy and deliver goods in a conventional way. This vendor 8 provides an online user form 6 which typically will be the same form which a human buyer would interact with directly via a web browser etc. Optionally, this web form could be a special form for this invention but typically will still contain web entry fields on an HTML page. In almost all cases, the form will be the same as a human user would use, in order to reduce the development burden on the vendor, i.e. in that way the vendor only needs to develop one payment system to allow payments to be taken both by telephone via a call agent and also directly from a buyer via a web browser.

A buyer 10 connects to a call agent 12 using a conventional telephone call and the call agent and buyer interact with one another to work towards completing a purchase of goods from the vendor 8. The call agent acts as a selling agent for the vendor in the sense that they may have a catalogue available, etc. so that a buyer that doesn't want to use a web browser for a remote purchase, can select and decide on goods to be bought in conversation using conventional voice tools.

At the point that the call agent 12 proceeds to taking payment from the buyer 10, the computerised payment controller 2 intervenes.

The payment controller takes payment card details directly from the buyer 10 without interaction with the call agent 12. The details are then passed directly to the online payment form 6 of the vendor without the call agent seeing any of the detail, thus preserving confidentiality of the payment details. During entry of the payment details, the call agent may have a blank screen or may have some form of indication of progress by the user. However, they will not have visibility of the details entered by the user. Once payment has been completed, control may pass back to the call agent 12 from the payment controller 2, so that the call may be completed with appropriate thanks etc.

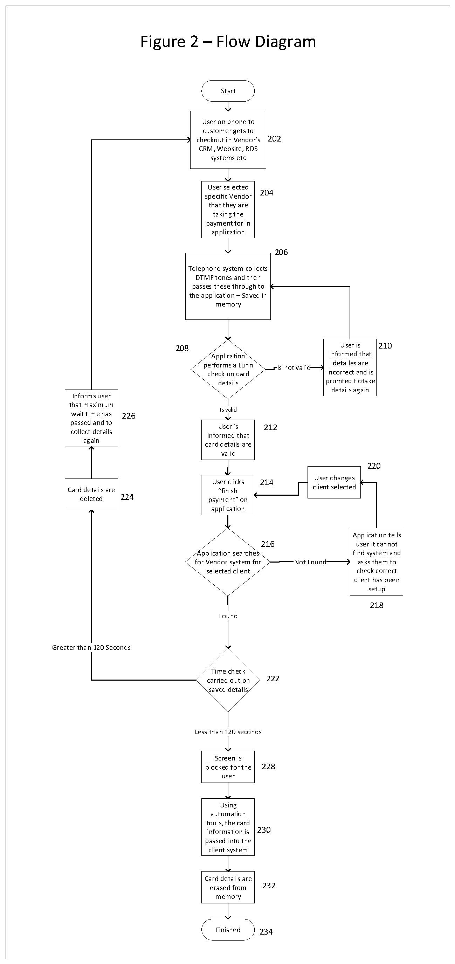

With reference to Figure 2 also, the detailed steps carried out under control of the payment controller are set out. At step 202, a call agent is in telephone conversation with a buyer and gets to the point of checking out in the relevant vendor system, which might be a customer relationship management system (CRM), website, relational database system (RDS) etc. At step 204, the call agent specifies a particular vendor that needs to take payment. At this point, the payment controller accesses the vendor database 4 to load appropriate details for the vendor, so that interaction with the online form 6 can be completed.

At step 206 the telephone system collects DTMF tones and passes these through to the payment controller 2 and they are saved in memory. During entry of the digits, the call agent is not able to see or hear any details of the entered digits by screen and audio blocking at the call agent's terminal. At the same time, optionally, user input from the call agent may be blocked (frozen), so that they are unable to interact with their own terminal whilst payment information is being entered by the buyer. It will be appreciated by the skilled person, that although the use of DTMF tones is described, these may be passed in some other way than audio tones, for example SIP RFC 2833 provides an entirely digital way to pass this data during a voice call. The important point is that details of key press events at the buyer's end of the call can be passed reliably through to the payment controller, and references to DTMF in this description are intended to encompass all ways of achieving this result. At step 208, a check of the credit card number, for example, using a luhn check on a check digit, is carried out to determine whether the card is valid. If the validity check fails, step 210 takes the call agent and buyer back to entry of DTMF tones to re-enter the card details.

At step 212 if the validity check passes, the agent is informed that the card details are valid and then at step 214, clicks finish payment on their display. This then passes control to the payment controller 2 to complete payment. At step 216, it is determined that there is a vendor entry in the vendor database 4, for the relevant vendor. If there is no vendor entry, i.e. the payment controller has not been set up to interact with the particular vendor, at step 218, the system tells the agent that it cannot find the vendor and asks them to check that the vendor has been set up. At step 220, the agent then, if possible, changes the selected vendor to one that is set up. At step 222, a time stamp is then made before the next steps are carried out. Steps 224 and 226 ensure that if card entry is not made within one hundred and twenty seconds, or some other suitable time period, the process starts again at step 202.

As long as card entry via DTMF is carried out in less than one hundred and twenty seconds, the call agent screen is blocked (step 228) so that the call agent cannot see entry of the digits on any screen, and the payment controller passes the card information to the vendor system as described in more detail below (step 230). Then in step 232, the card details are erased from the payment controller memory and the payment process is finished (step 234) and control of the call is passed back to the call agent to complete the call with the buyer.

In order to set up a vendor to work with the payment controller, the vendor database 4 needs to be populated for each vendor online payment form. And the database, will typically hold fields to record pertinent details for a buyer transaction.

A typical set of data is set out in the table below.

| **Field Names** | **Type** | **Use** |
|---|---|---|
| Payment form URL/PageTitle | String | This is used for the software to identify the page and to begin passing through the payment information |
| Card Number | String | This is the long card number on the front of the card which is collected by the phone system and the payment controller will pickup and pass through to the payment system for the vendor. |
| Expiry Date | String | This is the card expiry date collected by the phone system and the payment controller will pickup and pass through to the payment system for the vendor. |
| CVV | String | This is the 3 digit security code on the back of the card that is collected by the phone system and the payment controller will pickup and pass through to the payment system for the vendor. |
| Name on Card | String | We manually take this name via the call agent and enter it into the database (as text cannot be captured within DTMF) and this is then passed through to the payment form for the vendor. |

As a minimum, the URL of the online form is contained in the database and also, typically, a starting field on the page, most typically using x-y cartesian coordinates. In this way, the payment controller is able to direct an artificial cursor to this x-y coordinate and initiate a mouse click to put the data entry cursor in that field. This assumes that the online form has a consistent layout at each payment session, as most do, so that the first piece of information that needs to be entered can be entered in the correct part of the form 6. Subsequent entry fields can typically then be accessed by issuing automated keyboard tab controls to move through the fields in a known sequence. In this case, the database 6 may contain an indication of the order of the data which is expected in each of the fields and which has been obtained from the buyer 10 as described above.

Thus, once the database 6 has been populated for a particular vendor, the payment controller may extract the appropriate URL from the database 4, access the web page at that URL, issue a cursor movement to the extracted x-y coordinate of the first field on the form, enter automated keyboard presses to enter the payment card detail for the first field, issue a tab command and start to enter the data via keyboard character simulations for the next field, and so on until the form is completed.

Preferably, storage of x-y coordinates is used as a last resort and the most effective method used at the moment, is using accessibility ID's which are unique ID's given to the form fields whereby payment controller application can identify the form required straight away and begin passing the information through.

Also as noted above, web forms may not be the only way of interacting with the vendor's systems. Some other form of interaction, such as a Citrix or remote desktop session may be used instead to allow direct interaction with one of the vendor's existing internal systems. All of these approaches avoid the need to generate a custom API for systems integration between the payment controller and the vendor's systems.

Thus, to set up a particular vendor all that is required is to know the URL and layout of the form and enter relevant details of the different fields into a relatively simple vendor database 4.

The skilled person will appreciate, therefore, that the development effort at the vendor which will be required in order to provide an online payment form can then be leveraged with little or no effort to allow voice purchases by a telephone system using the call agent. Similarly, at the call agent entity, the effort to introduce a new vendor entity into the system is relatively small in that all that is required is to create a mapping onto the vendor online form in the database 4 which, broadly speaking involves relatively simple automated navigation of an online web form or some other entry form or tool such as a SQL Ul. In all instances, the information gathering from the buyer and the interaction with the call agent can remain the same, so that the only customisation required for introducing a new vendor, is to design the records in the database 4.

It will be seen therefore that this is a significant improvement on the complexity technically (and indeed commercially) of previous arrangements in which separate payment systems and interfaces were required to operate in parallel when taking payment directly via an online form and wishing to take payment via telephone call. Also, only a single relationship with the payment merchant entity is required, and that is between the vendor and the payment merchant. It is not necessary to have a separate relationship, technically and commercially, between the call agent entity and the payment merchant entity. This introduces further simplicity and streamlining of the process.

In terms of navigating the payment form 6, some standard parts of Microsoft Windows may be used and in particular some of the accessibility and screen reader components already built into this operating system. This can be accomplished by using Microsoft Windows API's and open source automation libraries to interact with Windows applications, browsers and java applications. The primary library used for this is Microsoft UI Automation. Also, it may be possible to use a remote desktop system such as Windows remote desktop or Citrix, for the payment controller to communicate with the vendor's systems. And using such a system, the payment controller may, for example interact directly with a SQL database, or some other form of user interface running on the vendor's local systems i.e. it need not be a web form delivered from a web server. Thus, this form need not be a publicly available web form, instead, the payment controller may enter into a secure communication via a remote desktop system to access the online form 6. Again, however, this has the technical advantage that no relationship or network connection is required between the call agent entity and payment controller, and the payment merchant entity. This can be achieved through the use of X,Y coordinates, whereby the system will have information of the coordinates for the input fields and map the payment data across. We can also use image search tools to verify that we are on the correct payment screen when we need to use the X,Y method.

## Claims

1. A method of making a secure payment over a voice telephone network comprising the steps of:-
providing a payment controller operable to receive payment information over a telephone network and pass it on to a vendor computer system, to effect payment, providing a computing device having a computer display, and a voice telephone device for a call agent,
commencing a telephone voice call between the call agent and a buyer,
the call agent directing the buyer with voice commands via the telephone device to enter buyer payment information via their telephone keypad,
receiving the payment card information at the payment controller,
causing the payment controller to provide progress information on the call agent display, but obscuring the detail of the payment information by blocking at least the relevant portion of the screen from view by stopping rendering of payment information at the call agent's terminal on the relevant portion of the display,
**characterised by** automatically and without human intervention, navigating a payment form that presents UI with forms for entry by end user such as an html-based card payment web page, a remote desktop session, a Windows application, remote desktop systems, a SQL front end, and/or a java applet of the vendor, in order to enter the buyer payment information into the vendor computer system and effect a secure payment, without interacting directly with a payment provider api.

2. A method as claimed in claim 1, wherein the telephone network transmits the payment information from the buyer to the payment controller using audio tones such as dtmf, and wherein the payment controller mutes the transfer of the dtmf tones to the call agent.

3. A method as claimed in claim 1 or claim 2, wherein the call agent display is blanked and interrupt commands on the call agent computing device such as ctrl-alt-del, are disabled during transfer of payment card information to the vendor web page.

4. A method as claimed in any preceding claim, wherein the payment controller includes a vendor database which contains a predetermined mapping of fields on the vendor card payment web page.

5. A method as claimed in claim 4, wherein the mapping includes at least a URL of the web page, and X-Y coordinates and the expected content, of a first field on the page.

6. A method as claimed in claim 5, wherein the mapping includes a subsequent field and its expected content, and which during payment information entry is located by the payment controller issuing a tab keyboard command, after the first field content entry has been completed.

7. A method as claimed in any preceding claim, wherein the payment controller interacts with the vendor computer system using a remote desktop control protocol, such that all the data entry processing is carried out on the vendor computer system and only desktop rendering and cursor control and keyboard commands are transmitted externally to the vendor computer system.

8. A method of making a secure payment over a voice telephone network in a computer system having a payment controller operable to receive payment information over a telephone network and pass it on to a vendor computer system, to effect payment, and a computing device having a computer display, and a voice telephone device for a call agent,
comprising the steps of:-
commencing a telephone voice call between the call agent and a buyer,
the call agent directing the buyer with voice commands via the telephone device to enter buyer payment card information via their telephone keypad,
receiving the payment card information at the payment controller,
causing the payment controller to provide progress information on the call agent display, but obscuring the detail of the payment card information on the display,
**characterised by** automatically and without human intervention, navigating a payment form that presents UI with forms for entry by end user such as an html-based card payment web page, a remote desktop session, a Windows application, remote desktop systems, a SQL front end, and/or a java applet of the vendor, in order to enter the buyer payment information into the vendor computer system and effect a secure payment, without interacting directly with a card payment provider api.

9. A computer-readable medium having computer-executable instructions adapted to cause a computer system to perform the method of any one of claims 1 to 7.
